# EUROPEAN PATENT SPECIFICATION

(11) **EP 3 184 837 B1**
(45) Date of publication and mention of the grant of the patent: **14.03.2018**
(21) Application number: 16199107.0
(22) Date of filing: 16.11.2016
(51) Int. Cl.: F16D 13/74, F16D 13/52

(54) **MULTIPLE-DISC CLUTCH AND VEHICLE HAVING THE SAME**
MEHRSCHEIBENKUPPLUNG UND FAHRZEUG DAMIT
EMBRAYAGE À DISQUES MULTIPLES ET VÉHICULE COMPORTANT CELUI-CI

(30) Priority: 18.12.2015 JP 2015247519
(43) Date of publication of application: 28.06.2017
(73) Proprietor: Yamaha Hatsudoki Kabushiki Kaisha, Iwata-shi, Shizuoka 438-8501 (JP)
(72) Inventor: TABATA, Koji, Iwata-shi, Shizuoka 438-8501 (JP); NOGI, Sadao, Iwata-shi, Shizuoka 438-8501 (JP); IWAKI, Yasuhiro, Iwata-shi, Shizuoka 438-8501 (JP); SATO, Kimihiko, Iwata-shi, Shizuoka 438-8501 (JP); NAKAGAWA, Hironobu, Iwata-shi, Shizuoka 438-8501 (JP)
(74) Representative: Grünecker Patent- und Rechtsanwälte PartG mbB

(56) References cited:
- DE-A1- 2 331 315
- JP-A- S57 184 728
- JP-A- 2014 206 203
- US-A1- 2011 192 699

## Description

The present invention relates to a multiple-disc clutch and a vehicle having the same.

Multiple-disc clutches lubricated by oil, i.e., wet multiple-disc clutches, are known in the art, as disclosed in Japanese Laid-Open Patent Publication No. 2014-206203, for example. Another example is patent application US 2011/0192699 A1 which discloses a multiple-disc clutch where the oil is supplied through a duct in the clutch cover. The multiple-disc clutch disclosed in Japanese Laid-Open Patent Publication No. 2014-206203 includes a clutch housing rotatably supported on a counter shaft, a sleeve hub non-rotatably supported on the counter shaft, a plurality of drive plates supported on the clutch housing, a plurality of driven plates supported on the sleeve hub, and a pressure plate configured to hold down the drive plates and the driven plates. The pressure plate is configured to be movable in the axial direction of the counter shaft. The pressure plate is urged by a spring toward the drive plates and the driven plates. A clutch release mechanism configured to pull the pressure plate away from the drive plates and the driven plates is placed on the outer side in the axial direction of the counter shaft. The clutch release mechanism pulls the pressure plate to disengage the clutch.

Provided inside the counter shaft are an oil passageway extending in the axial direction of the counter shaft, and an oil hole extending from the oil passageway to the outer circumferential surface of the counter shaft. Oil is supplied to the drive plates and the driven plates through the oil passageway and the oil hole.

With such a wet multiple-disc clutch, a high precision and a large cost are required for the process of forming an oil passageway extending in the axial direction inside the counter shaft. On the other hand, if oil is to be sprayed from outside toward the multiple-disc clutch, there is no need to machine an oil passageway extending in the axial direction inside the clutch shaft. However, the drive plates and the driven plates are surrounded by other members of the multiple-disc clutch. Therefore, by simply spraying oil from outside onto the multiple-disc clutch, it is difficult to desirably supply oil to the drive plates and the driven plates.

It is an object of the present invention to provide a multiple-disc clutch that can realize both a reduction in the machining cost and a good lubricity.

According to the present invention said object is solved by a multiple-disc clutch having the features of independent claim 1. Preferred embodiments are laid down in the dependent claims.

A multiple-disc clutch includes a clutch shaft, a clutch housing, a clutch boss, a plurality of first plates, a plurality of second plates, a pressure plate, a spring, a clutch release mechanism, and a cover. The clutch housing is rotatably supported on the clutch shaft, the clutch housing including a first disc portion with a first through hole therein accommodating the clutch shaft passing therethrough, and a first plate-supporting portion extending in an axial direction of the clutch shaft from the first disc portion. The clutch boss is supported on the clutch shaft so that the clutch boss rotates together with the clutch shaft, the clutch boss including a second disc portion facing the first disc portion in the axial direction, a boss portion with a second through hole therein accommodating the clutch shaft passing therethrough, the boss portion extending in the axial direction from the second disc portion, and a second plate-supporting portion located on an outer side of the boss portion in a radial direction of the clutch shaft, the second plate-supporting portion extending in the axial direction from the second disc portion. The first plates are placed on an inner side of the first plate-supporting portion in the radial direction and supported on the first plate-supporting portion. The second plates are placed on an outer side of the second plate-supporting portion in the radial direction and supported on the second plate-supporting portion, the second plates facing the first plates. The pressure plate is placed opposite from the clutch housing with respect to the clutch boss. The spring is attached to the pressure plate and configured to urge the pressure plate toward the first plates and the second plates. The clutch release mechanism is configured to apply a force upon the pressure plate in a direction away from the first plates and the second plates. The cover is placed opposite from the clutch boss with respect to the pressure plate. The cover includes an oil passageway configured to allow oil to pass therethrough, and a nozzle connected to the oil passageway, the nozzle including an opening facing toward the pressure plate. The pressure plate includes an oil passage hole configured to allow oil injected from the nozzle to pass therethrough, the oil passage hole being placed on an outer side of the boss portion of the clutch boss in the radial direction and on an inner side of the second plate-supporting portion in the radial direction. The second plate-supporting portion of the clutch boss includes a first oil supply hole extending in the radial direction.

With the multiple-disc clutch described above, oil is supplied to the oil passageway provided in the cover, and the oil is injected from the nozzle toward the pressure plate. A part of the oil injected from the nozzle passes through the oil passage hole of the pressure plate to be supplied to the second disc portion of the clutch boss. This oil flows toward the second plate-supporting portion under the centrifugal force generated from the rotation of the clutch boss. Then, oil having reached the second plate-supporting portion passes through the first oil supply hole to be supplied to the first plates and the second plates. With the multiple-disc clutch described above, an oil passageway extending in the axial direction is not needed inside the clutch shaft. Therefore, it is possible to reduce the machining cost. Moreover, since oil is supplied to the second disc portion of the clutch boss, it is possible to supply oil to locations closer to the first plates and the second plates, as compared with a case in which oil is supplied from the clutch shaft to the boss portion of the clutch boss. Moreover, since the second disc portion is farther away from the center axis of the clutch shaft than the boss portion, the centrifugal force acting upon oil on the second disc portion is greater than the centrifugal force acting upon oil on the boss portion. Therefore, after oil is supplied to the clutch boss, it is possible to more quickly supply the oil to the first plates and the second plates. Therefore, it is possible to increase the lubricity. Thus, with the multiple-disc clutch described above, it is possible to realize both a reduction in the machining cost and a good lubricity.

According to a preferred embodiment, a distance between a center axis of the clutch shaft and a center of the nozzle is equal to a distance between the center axis of the clutch shaft and a part of the oil passage hole.

According to the above embodiment, the position of the nozzle and the position of the oil passage hole temporarily coincide with each other during rotation of the pressure plate. When the position of the nozzle and the position of the oil passage hole coincide with each other, oil injected from the nozzle can easily pass through the oil passage hole. Thus, it is possible to further increase the lubricity.

According to another preferred embodiment, the pressure plate includes a spring hole accommodating the spring therein. The oil passage hole is smaller than the spring hole as seen from the axial direction of the clutch shaft.

According to the above embodiment, it is possible to prevent an excessive amount of oil from being supplied to the clutch boss through the oil passage hole.

According to another preferred embodiment, the multiple-disc clutch further includes another spring attached to the pressure plate and configured to urge the pressure plate toward the first plates and the second plates. The pressure plate includes another spring hole accommodating the other spring therein. The oil passage hole is provided between the spring hole and the other spring hole with respect to a circumferential direction.

According to the above embodiment, it is possible to make efficient use of the area of the pressure plate between the spring hole and the other spring hole for providing the oil passage hole. The oil passage hole can be provided without being interfered by the spring hole and the other spring hole. Thus, it is possible to ensure the degree of freedom for the shape and the size of the oil passage hole.

According to another preferred embodiment, the pressure plate includes another oil passage hole adjacent to the oil passage hole in a circumferential direction.

According to the above embodiment, the pressure plate includes a plurality of oil passage holes arranged next to each other in the circumferential direction. Therefore, it is possible to ensure a sufficient amount of oil being supplied from the nozzle to the clutch boss. Moreover, oil can be supplied relatively evenly.

According to another preferred embodiment, the second plate-supporting portion of the clutch boss includes a second oil supply hole extending in the radial direction. The first oil supply hole and the second oil supply hole are arranged next to each other in the axial direction of the clutch shaft.

According to the above embodiment, oil supplied to the second disc portion of the clutch boss can be supplied more desirably to the first plates and the second plates. Thus, it is possible to more desirably lubricate the multiple-disc clutch.

According to another preferred embodiment, the second plate-supporting portion of the clutch boss includes a third oil supply hole extending in the radial direction. The first oil supply hole and the third oil supply hole are arranged next to each other in a circumferential direction.

According to the above embodiment, oil supplied to the second disc portion of the clutch boss can be supplied more desirably to the first plates and the second plates. Thus, it is possible to more desirably lubricate the multiple-disc clutch.

According to another preferred embodiment, the clutch boss includes a rib projecting in the axial direction of the clutch shaft from the second disc portion and extending in the radial direction. The first oil supply hole is located downstream of the rib in a rotation direction of the clutch boss.

Since the clutch boss is rotating, oil supplied to the clutch boss is moved radially outward by the centrifugal force, and moves in the opposite direction to the rotation direction with respect to the clutch boss. According to the above embodiment, oil supplied to the second disc portion of the clutch boss is held by the rib. Since the first oil supply hole is located downstream of the rib in the rotation direction, the oil held by the rib is likely to flow radially outward through the first oil supply hole. Therefore, it is possible to ensure a sufficient amount of oil passing through the first oil supply hole. Thus, it is possible to sufficiently supply oil to the first plates and the second plates.

According to another preferred embodiment, a distance between a center axis of the clutch shaft and a center of the nozzle is equal to a distance between the center axis of the clutch shaft and a part of the rib.

According to the above embodiment, it is possible to allow oil injected from the nozzle to hit, and be diffused by, the rib. Therefore, it is possible to desirably supply oil across the entire multiple-disc clutch.

According to another preferred embodiment, the nozzle is smaller than the first oil passage hole as seen from the axial direction of the clutch shaft.

According to the above embodiment, by making the nozzle relatively small, it is possible to prevent an excessive amount of oil from being supplied from the nozzle. Also, by making the nozzle relatively small, it is possible to increase the force of the oil injected from the nozzle. Thus, it is possible to desirably supply oil from the nozzle.

According to another preferred embodiment, a distance in the axial direction of the clutch shaft between the nozzle and the oil passage hole is shorter than a distance in the axial direction of the clutch shaft between the oil passage hole and the second disc portion of the clutch boss.

According to the above embodiment, since the distance between the nozzle and the oil passage hole is short, oil injected from the nozzle can be quickly guided to the oil passage hole. Therefore, it is possible to ensure a sufficient amount of oil passing through the oil passage hole, and to desirably lubricate the multiple-disc clutch.

According to another preferred embodiment, an intersection between the second disc portion and the second plate-supporting portion of the clutch boss is curved so that a part of the intersection that is located more radially outward extends more along the axial direction.

According to the above embodiment, oil under the centrifugal force can smoothly move from the second disc portion to the second plate-supporting portion, desirably supplying oil to the first plates and the second plates.

A vehicle of the present teaching is a vehicle including such a multiple-disc clutch as described above.

Thus, it is possible to provide a vehicle including a multiple-disc clutch that can realize both a reduction in the machining cost and a good lubricity.

### Advantageous Effects Of Invention

According to the present invention, it is possible to provide a multiple-disc clutch that can realize both a reduction in the machining cost and a good lubricity.

### BRIEF DESCRIPTION OF THE DRAWINGS

FIG. 1 is a side view of a motorcycle according to one preferred embodiment.
FIG. 2 is a cross-sectional view of a power unit.
FIG. 3 is a cross-sectional view of a multiple-disc clutch.
FIG. 4 is an enlarged cross-sectional view of a portion of a clutch boss.
FIG. 5 is a front view of a clutch boss.
FIG. 6 is a cross-sectional view taken along line VI-VI of FIG. 5.
FIG. 7 is a front view of a pressure plate.
FIG. 8 is a back view of a crankcase cover.
FIG. 9 is a front view of a multiple-disc clutch.
FIG. 10 is a view illustrating an operation of supplying oil to a multiple-disc clutch.

### DETAILED DESCRIPTION OF THE PREFERRED EMBODIMENTS

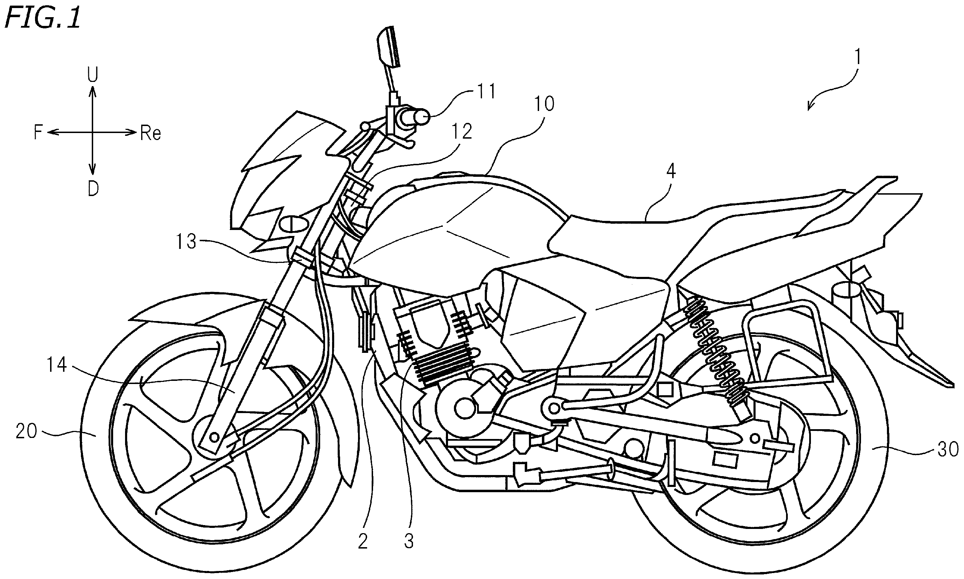

One preferred embodiment will now be described with reference to the drawings. As shown in FIG. 1, a vehicle of the present embodiment is a motorcycle 1, which is an example straddled vehicle to be straddled by a passenger. Note however that the vehicle of the present teaching is not limited to the motorcycle 1, but may be any other straddled vehicle. The vehicle of the present teaching may be a vehicle other than a straddled vehicle.

The terms front, rear, left, right, up and down, as used in the description below, refer to these directions as seen from a passenger seated in a seat 4 of the motorcycle 1. The terms up and down refer to these directions in the vertical direction while the motorcycle 1 is stationary on a horizontal surface. The designations F, Re, L, R, U and D, as used in the figures, refer to front, rear, left, right, up and down, respectively.

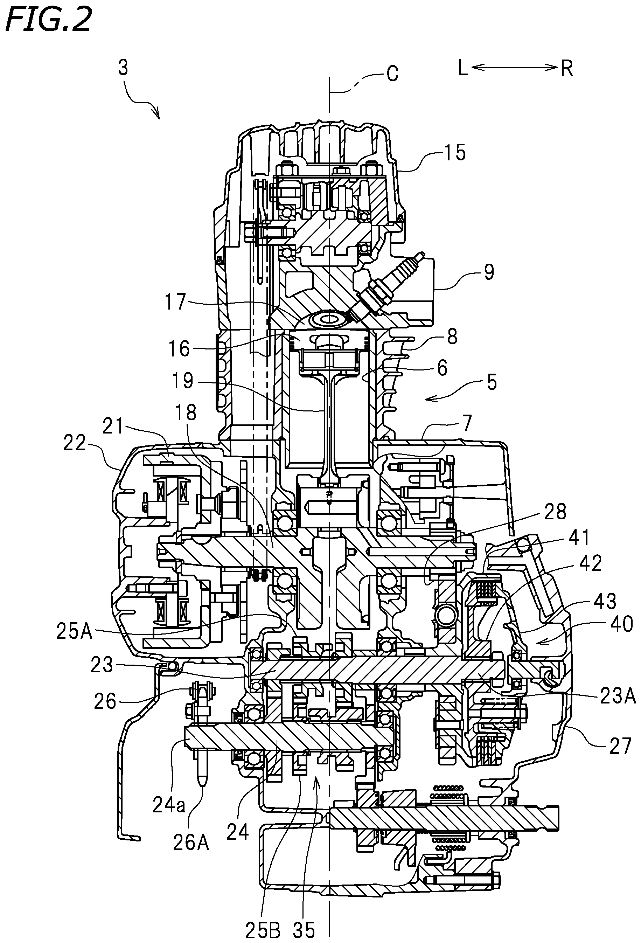

As shown in FIG. 1, the motorcycle 1 includes a vehicle body frame 2 including a head pipe 12, a power unit 3 supported on the vehicle body frame 2, a front wheel 20 and a rear wheel 30. A steering shaft 13 is rotatably supported on the head pipe 12. A handle bar 11 is fixed on an upper portion of the steering shaft 13, and a front fork 14 is fixed on a lower portion of the steering shaft 13. The front wheel 20 is attached to the front fork 14. A fuel tank 10 is placed upward of the power unit 3. The seat 4 is placed rearward of the fuel tank 10. The power unit 3 is linked to the rear wheel 30 via a transmission member such as a chain 26 (not shown in FIG. 1; see FIG. 2).

Next, a configuration of the power unit 3 will be described. As shown in FIG. 2, the power unit 3 includes an internal combustion engine 5. The power unit 3 drives the rear wheel 30 using the power from the internal combustion engine 5. In the present embodiment, the internal combustion engine 5 is a single-cylinder internal combustion engine including a single cylinder 6. Note however that the internal combustion engine 5 may be a multi-cylinder internal combustion engine including a plurality of cylinders.

The power unit 3 includes a crankcase 7, a cylinder block 8 fixed on the crankcase 7, a cylinder head 9 fixed on the cylinder block 8, and a cylinder head cover 15 fixed on the cylinder head 9. The cylinder 6 is placed inside the cylinder block 8, and a piston 16 is placed inside the cylinder 6. A combustion chamber 17 is defined by the piston 16, the cylinder 6 and the cylinder head 9.

A crankshaft 18 is placed inside the crankcase 7. The crankshaft 18 and the piston 16 are linked together by a connecting rod 19. A generator 21 is attached to the left end of the crankshaft 18. A generator case 22 is placed leftward of the crankcase 7. The generator 21 is covered by the generator case 22. A gear 28 is fixed at the right end of the crankshaft 18.

A main shaft 23 and a drive shaft 24 are placed inside the crankcase 7. The main shaft 23 and the drive shaft 24 are placed parallel to the crankshaft 18. A plurality of transmission gears 25A are provided on the main shaft 23. Transmission gears 25B, meshing with the transmission gears 25A, are provided on the drive shaft 24. The main shaft 23, the transmission gears 25A, the transmission gears 25B and the drive shaft 24 together form a transmission 35. The left end 24a of the drive shaft 24 is placed outside the crankcase 7. A sprocket 26A is fixed at the left end 24a of the drive shaft 24, with the chain 26 wrapped around the sprocket 26A.

A multiple-disc clutch (hereinafter referred to simply as a "clutch") 40 is provided at the right end of the main shaft 23. In the following description, a part of the main shaft 23, over which the clutch 40 is provided, will be referred to as a clutch shaft 23A. Note that although the clutch shaft 23A is a part of the main shaft 23 in the present embodiment, the clutch shaft 23A and the main shaft 23 may be separate from each other. A crankcase cover 27 is placed rightward of the crankcase 7. The clutch 40 is covered by the crankcase cover 27. The clutch 40 is a wet clutch, which is lubricated by oil, as will be described below in detail. The clutch 40 includes the clutch shaft 23A, a clutch housing 41, a clutch boss 42 and a pressure plate 43.

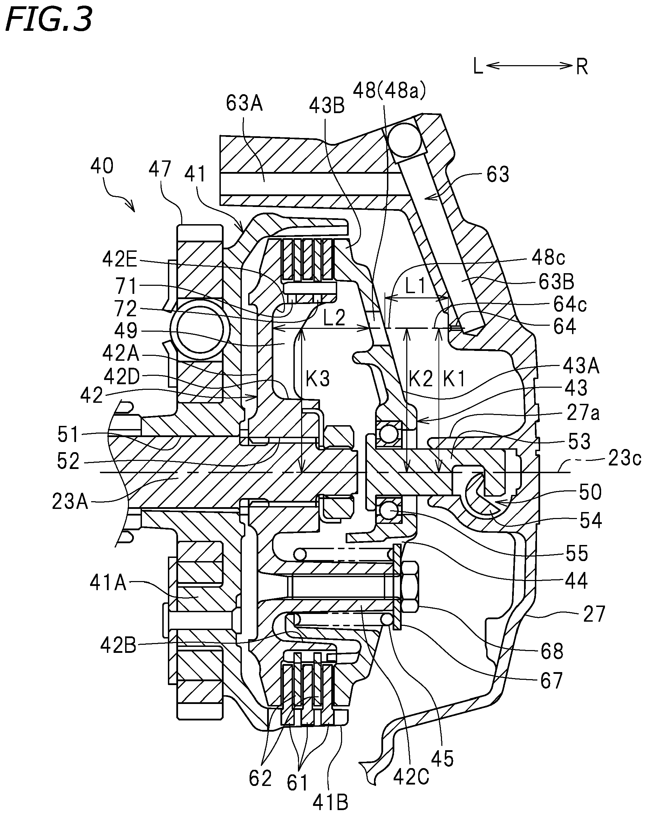

As shown in FIG. 3, the clutch housing 41 is rotatably supported on the clutch shaft 23A. The clutch housing 41 is rotatable relative to the clutch shaft 23A. The clutch housing 41 includes a first disc portion 41A with a first through hole 51 therein, with the clutch shaft 23A passing therethrough, and a first plate-supporting portion 41B extending in the axial direction of the clutch shaft 23A from the first disc portion 41A. In the present embodiment, the first plate-supporting portion 41B extends rightward from the first disc portion 41A. The first disc portion 41A of the clutch housing 41 includes a gear 47 meshing with the gear 28 of the crankshaft 18 (see FIG. 2). The clutch housing 41 is linked to the crankshaft 18 via the gear 28 and the gear 47. The clutch housing 41 is configured to rotate with the crankshaft 18.

The clutch boss 42 is non-rotatably supported on the clutch shaft 23A. The clutch boss 42 is configured to rotate with the clutch shaft 23A. The clutch boss 42 includes a boss portion 42D, a second disc portion 42A and a second plate-supporting portion 42B. The boss portion 42D includes a second through hole 52, with the clutch shaft 23A passing therethrough. The boss portion 42D extends in the axial direction of the clutch shaft 23A from the second disc portion 42A. The boss portion 42D is formed in a cylindrical shape. The second disc portion 42A faces the first disc portion 41A in the axial direction of the clutch shaft 23A. The second plate-supporting portion 42B extends in the axial direction of the clutch shaft 23A from the second disc portion 42A. An intersection 42E between the second disc portion 42A and the second plate-supporting portion 42B is curved so that a part of the intersection 42E that is located more radially outward of the clutch shaft 23A extends more along the axial direction. As shown in FIG. 3, the intersection 42E is not rectangular but is rounded along a cross section that includes the axis of the clutch boss 42. In this cross section, the intersection 42E is formed in a curved shape. The second plate-supporting portion 42B is located on the outer side of the boss portion 42D in the radial direction of the clutch shaft 23A. The direction in which the second plate-supporting portion 42B extends from the second disc portion 42A is the same as the direction in which the first plate-supporting portion 41B extends from the first disc portion 41A, and the direction is the rightward direction in the present embodiment. The second disc portion 42A is placed farther away from the cylinder axis C than the first disc portion 41A (see FIG. 2). In the present embodiment, the second disc portion 42A is placed rightward of the first disc portion 41A. The second plate-supporting portion 42B is placed on the inner side of the first plate-supporting portion 41B in the radial direction of the clutch shaft 23A. The second plate-supporting portion 42B is placed closer to the clutch shaft 23A than the first plate-supporting portion 41B.

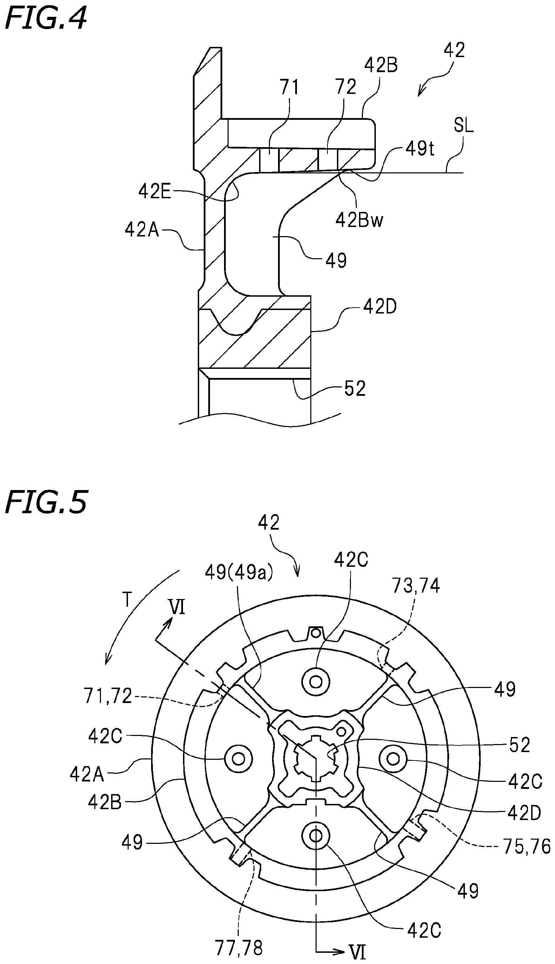

FIG. 4 is a cross-sectional view showing a portion of the clutch boss 42 on an enlarged scale. In FIG. 4, the line SL represents a direction parallel to the axis of the clutch shaft 23A. The direction of the axis of the clutch shaft 23A and a direction parallel to the axis will hereinafter be referred to simply as the "axial direction", unless specified otherwise. The radial direction of the clutch shaft 23A will be referred to simply as the "radial direction". As shown in FIG. 4, a wall surface 42Bw on the radially inner side of the second plate-supporting portion 42B extends away from the second disc portion 42A while flaring or being inclined radially outward with respect to the axial direction SL. While there is no particular limitation on the method for producing the clutch boss 42, if the clutch boss 42 is made by die-cast molding, such an inclination as described above makes it easier to release the clutch boss 42 from the mold. Thus, the manufacture of the clutch boss 42 is facilitated.

As shown in FIG. 3, a plurality of first plates 61 are supported on the first plate-supporting portion 41B of the clutch housing 41. The first plates 61 are arranged next to each other in the axial direction of the clutch shaft 23A. The first plates 61 are placed radially inward of the first plate-supporting portion 41B. The first plates 61 are in engagement with the first plate-supporting portion 41B so that the first plates 61 rotate together with the first plate-supporting portion 41B. Also, the first plates 61 are in engagement with the first plate-supporting portion 41B so that the first plates 61 are movable in the axial direction of the clutch shaft 23A.

A plurality of second plates 62 are supported on the second plate-supporting portion 42B of the clutch boss 42. The second plates 62 are arranged next to each other in the axial direction of the clutch shaft 23A so that the second plates 62 are adjacent to the first plates 61. The first plates 61 and the second plates 62 are placed so as to alternate with each other. The second plates 62 are facing the first plates 61. The second plates 62 are placed radially outward of the second plate-supporting portion 42B. The second plates 62 are in engagement with the second plate-supporting portion 42B so that the second plates 62 rotate together with the second plate-supporting portion 42B. The second plates 62 are in engagement with the second plate-supporting portion 42B so that the second plates 62 are movable in the axial direction of the clutch shaft 23A.

The pressure plate 43 is placed opposite from the clutch housing 41 with respect to the clutch boss 42. In the present embodiment, the clutch housing 41 is placed leftward of the clutch boss 42, and the pressure plate 43 is placed rightward of the clutch boss 42. The pressure plate 43 includes a disc portion 43A, and a contact portion 43B to contact a first plate 61 or a second plate 62. In the present embodiment, the contact portion 43B contacts the first plates 61.

Springs 45 are attached to the pressure plate 43. The springs 45 urge the pressure plate 43 toward the first plates 61 and the second plates 62. While the springs 45 are coil springs in the present embodiment, there is no particular limitation on the type of the springs 45.

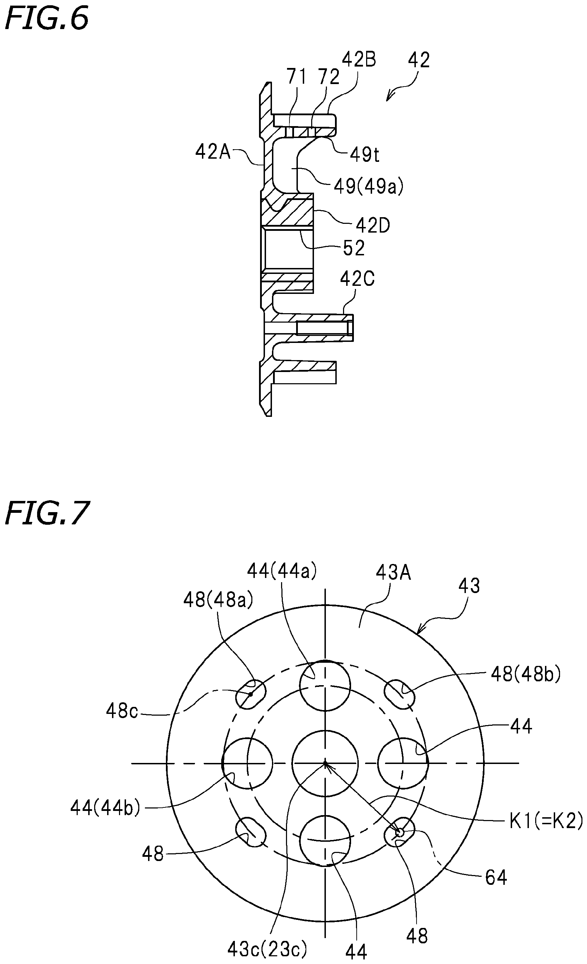

As shown in FIG. 5 and FIG. 6, the clutch boss 42 includes projections 42C supporting the springs 45. While the clutch boss 42 includes four projections 42C in the present embodiment, there is no particular limitation on the number of projections 42C. As shown in FIG. 3, the disc portion 43A of the pressure plate 43 includes spring holes 44 accommodating therein the springs 45 supported on the projections 42C. Since the number of projections 42C is four in the present embodiment, there are four spring holes 44 in the pressure plate 43 as shown in FIG. 7. The four spring holes 44 are equidistant from each other in the circumferential direction. That is, the four spring holes 44 are provided at an interval of 90°. Note however that there is no particular limitation on the number and the arrangement of the spring holes 44, which may be determined in accordance with the projections 42C of the clutch boss 42.

As shown in FIG. 3, a spring bearing 67 is fixed to the projection 42C by a bolt 68. One end of each spring 45 is in engagement with the spring bearing 67, and the other end of the spring 45 is in engagement with the pressure plate 43. Herein, the spring 45 extends in the left-right direction, with the right end of the spring 45 engaging with the clutch boss 42 and the left end of the spring 45 engaging with the pressure plate 43. The pressure plate 43 is urged leftward by the spring 45. Thus, the contact portion 43B of the pressure plate 43 presses a first plate 61 leftward, thereby pressing the first plates 61 and the second plates 62 against each other. As a result, the clutch 40 engages.

The clutch 40 includes a clutch release mechanism 50 for applying a force upon the pressure plate 43 in the direction away from the first plates 61 and the second plates 62. The clutch release mechanism 50 includes a support shaft 53 supporting the pressure plate 43, and a cam 54 in engagement with the support shaft 53. The pressure plate 43 is supported on the support shaft 53 via a bearing 55. The pressure plate 43 is supported rotatably with respect to the support shaft 53. The pressure plate 43 is supported immovably in the axial direction with respect to the support shaft 53. Therefore, the pressure plate 43 is movable in the axial direction together with the support shaft 53.

The crankcase cover 27 includes a cylindrical portion 27a, with the support shaft 53 inserted therein. The support shaft 53 is supported slidably in the axial direction in the cylindrical portion 27a. The cam 54 can rotate about a direction perpendicular to the axial direction of the support shaft 53, thereby moving the support shaft 53 in the axial direction. The clutch 40 engages as the support shaft 53 moves toward the clutch shaft 23A. Conversely, the clutch 40 disengages as the support shaft 53 moves away from the clutch shaft 23A. The clutch release mechanism 50 can engage and disengage the clutch 40 by rotating the cam 54.

Note that the clutch release mechanism 50 described above is merely an example. The clutch 40 may employ any clutch release mechanism 50 that is capable of moving the pressure plate 43 away from the clutch shaft 23A.

As stated above, the clutch 40 is a wet clutch, and oil is supplied thereto. Next, a mechanism for supplying oil to the clutch 40 will be described. As shown in FIG. 3, the crankcase cover 27 includes therein an oil passageway 63 allowing oil to pass therethrough, and a nozzle 64 connected to the oil passageway 63.

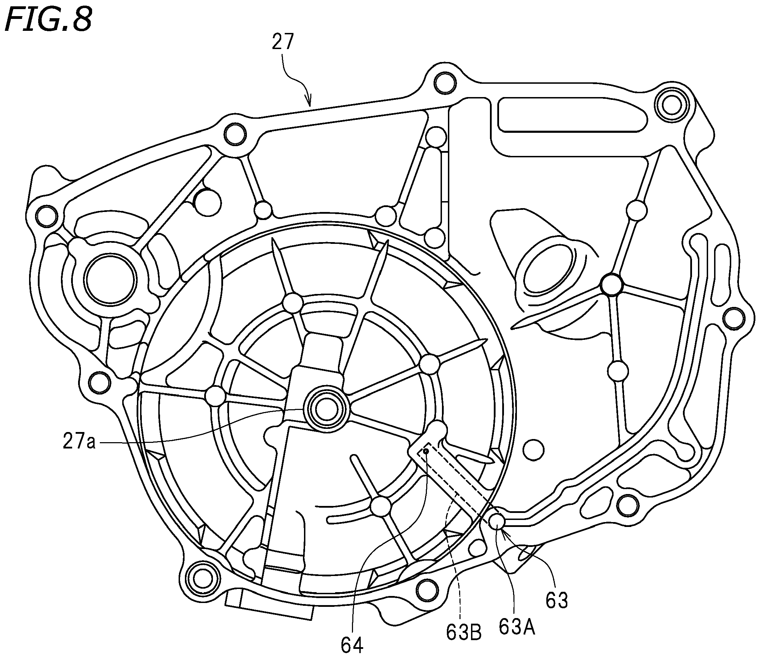

Oil is supplied into the oil passageway 63 from an oil pump (not shown). While there is no particular limitation on the configuration of the oil passageway 63, the oil passageway 63 of the present embodiment includes a passageway 63A extending parallel to the clutch shaft 23A, and a passageway 63B extending from the outside toward the inside in the radial direction of the clutch shaft 23A (see FIG. 8).

The nozzle 64 is connected to the passageway 63B. The nozzle 64 is provided at the innermost portion of the passageway 63B in the radial direction of the clutch shaft 23A, as shown in FIG. 8. Note however that there is no particular limitation on the location of the nozzle 64. As shown in FIG. 3, the nozzle 64 has an opening facing toward the pressure plate 43. Herein, the nozzle 64 has an opening facing left. Note that the opening of the nozzle 64 may be facing in the axial direction of the clutch shaft 23A or may be facing in a direction inclined from the axial direction. The opening area of the nozzle 64 is smaller than the cross-sectional area of the passageway of the oil passageway 63. The diameter of the nozzle 64 is smaller than the diameter of the oil passageway 63. Note that the "diameter" of an object, as used herein, refers to the hydraulically equivalent diameter thereof when the object is not circular, unless specified otherwise. Note that the "object" refers not only to a tangible object such as a shaft, but also to an intangible object such as an opening.

In the present embodiment, the clutch shaft 23A does not include a hole for supplying oil to the clutch 40. No hole extending in the axial direction is provided inside the main shaft 23.

As shown in FIG. 7, the pressure plate 43 includes oil passage holes 48, separately from the spring holes 44. While four oil passage holes 48 are provided in the present embodiment, there is no particular limitation on the number of oil passage holes 48. The four oil passage holes 48 are arranged next to each other in the circumferential direction of the pressure plate 43. Denoting the upper left oil passage hole 48 and the upper right oil passage hole 48 in FIG. 7 as a first oil passage hole 48a and a second oil passage hole 48b, respectively, the first oil passage hole 48a and the second oil passage hole 48b are arranged next to each other in the circumferential direction. The distance between the center 43c of the pressure plate 43 and the center 48c of each oil passage hole 48 is equal to the distance between the center 43c and the center 48c of any other oil passage hole 48. Note however that the oil passage holes 48 do not need to be arranged next to each other in the circumferential direction, and they may be staggered from each other in the radial direction. In the present embodiment, the oil passage holes 48 are provided between the spring holes 44 with respect to the circumferential direction of the pressure plate 43. For example, in FIG. 7, the first oil passage hole 48a is provided between a spring hole 44a and another spring hole 44b with respect to the circumferential direction.

The opening area of an oil passage hole 48 is smaller than the opening area of a spring hole 44. Note however that there is no particular limitation on the opening area of an oil passage hole 48, and it may be equal to or larger than the opening area of a spring holes 44. As seen from the axial direction of the clutch shaft 23A, the nozzle 64 is smaller than an oil passage hole 48. The diameter of the nozzle 64 is smaller than the diameter of an oil passage hole 48.

In the present embodiment, each oil passage hole 48 is an oblong hole that is longer in the circumferential direction of the pressure plate 43 than in the radial direction. Note however that there is no particular limitation on the shape of the oil passage hole 48, and the oil passage hole 48 may be, for example, an oblong hole that is shorter in the circumferential direction of the pressure plate 43 than in the radial direction. The shape of the oil passage hole 48 may be any other shape, such as circular or rectangular.

The oil passage holes 48 serve to allow the oil, injected from the nozzle 64, to pass therethrough. Oil injected from the nozzle 64 moves from the right side to the left side of the pressure plate 43 by passing through the oil passage holes 48. The oil passage holes 48 are placed so as to be temporarily aligned with the nozzle 64, as seen from the axial direction of the clutch shaft 23A, during rotation of the pressure plate 43. That is, as shown in FIG. 3, the distance K1 between the center axis 23c of the clutch shaft 23A and the center 64c of the nozzle 64 is equal to the distance K2 between the center axis 23c of the clutch shaft 23A and a part of the oil passage hole 48 (herein, the center 48c of the oil passage hole 48). The nozzle 64 and the oil passage hole 48 are provided radially inward of the second plate-supporting portion 42B of the clutch boss 42, as seen from the axial direction of the clutch shaft 23A. The nozzle 64 and the oil passage hole 48 are provided radially outward of the boss portion 42D of the clutch boss 42, as seen from the axial direction of the clutch shaft 23A.

While there is no particular limitation on the distance between the nozzle 64 and the oil passage hole 48a, the distance L1 in the axial direction between the nozzle 64 and the oil passage hole 48 is shorter than the distance L2 in the axial direction between the oil passage hole 48 and the second disc portion 42A of the clutch boss 42 in the present embodiment, as shown in FIG. 3. Note that the distance in the axial direction between the nozzle 64 and the oil passage hole 48 means the distance in the axial direction between the center 64c of the nozzle 64 and the center 48c of the oil passage hole 48. The distance in the axial direction between the oil passage holes 48 and the second disc portion 42A means the distance in the axial direction between the center 48c of the oil passage hole 48 and the second disc portion 42A.

The clutch 40 is configured so that the second disc portion 42A of the clutch boss 42 is visible through the oil passage holes 48, as seen from the axial direction of the clutch shaft 23A. Between the pressure plate 43 and the second disc portion 42A of the clutch boss 42, there is no interfering component preventing oil, which has been injected from the nozzle 64 and passed through the oil passage hole 48, from reaching the second disc portion 42A.

A part of the oil injected from the nozzle 64 passes through the oil passage hole 48 of the pressure plate 43 to land on the second disc portion 42A of the clutch boss 42. Since the clutch boss 42 is rotating, the oil on the second disc portion 42A moves from the second disc portion 42A to the second plate-supporting portion 42B. The second plate-supporting portion 42B of the clutch boss 42 includes a first oil supply hole 71 and a second oil supply hole 72 for supplying the oil to the first plates 61 and the second plates 62. The first oil supply hole 71 and the second oil supply hole 72 each extend in the radial direction. The first oil supply hole 71 and the second oil supply hole 72 are arranged next to each other in the axial direction of the clutch shaft 23A.

As shown in FIG. 5, the second plate-supporting portion 42B of the clutch boss 42 includes the third to eighth oil supply holes 73 to 78 extending in the radial direction. In the present embodiment, the second plate-supporting portion 42B includes eight oil supply holes 71 to 78. The third oil supply hole 73 and the fourth oil supply hole 74 are arranged next to each other in a direction parallel to the axial direction of the clutch shaft 23A. Also the fifth oil supply hole 75 and the sixth oil supply hole 76, and the seventh oil supply hole 77 and the eighth oil supply hole 78, are arranged next to each other in a direction parallel to the axial direction of the clutch shaft 23A. The first oil supply hole 71, the third oil supply hole 73, the fifth oil supply hole 75 and the seventh oil supply hole 77 are arranged next to each other in the circumferential direction. The second oil supply hole 72, the fourth oil supply hole 74, the sixth oil supply hole 76 and the eighth oil supply hole 78 are arranged next to each other in the circumferential direction. In the present embodiment, the first oil supply hole 71, the third oil supply hole 73, the fifth oil supply hole 75 and the seventh oil supply hole 77 are arranged next to each other at an interval of 90° about the center of the clutch boss 42. The second oil supply hole 72, the fourth oil supply hole 74, the sixth oil supply hole 76 and the eighth oil supply hole 78 are arranged next to each other at an interval of 90° about the center of the clutch boss 42.

There is no particular limitation on the size of the first to eighth oil supply holes 71 to 78. The diameter of the first to eighth oil supply holes 71 to 78 may be less than or equal to the thickness of the first plates 61 or the second plates 62. Alternatively, the diameter of the first to eighth oil supply holes 71 to 78 may be greater than the thickness of the first plates 61 or the second plates 62. In the present embodiment, the first to eighth oil supply holes 71 to 78 are larger than the nozzle 64. That is, the diameter of the first to eighth oil supply holes 71 to 78 is greater than the diameter of the nozzle 64.

Note that the above-described configuration is merely an example, and the number of oil supply holes is not limited to eight. The number of oil supply holes may be one to seven, or nine or more. Also, there is no particular limitation on the positions of the oil supply holes. For example, the first oil supply hole 71 and the second oil supply hole 72 do not need to be arranged next to each other in a direction parallel to the axial direction of the clutch shaft 23A. The third oil supply hole 73 and the fourth oil supply hole 74 also do not need to be arranged next to each other in a direction parallel to the axial direction of the clutch shaft 23A. There is no particular limitation on the interval between the first oil supply hole 71 and the third oil supply hole 73 and the interval between the second oil supply hole 72 and the fourth oil supply hole 74. Although the first to eighth oil supply holes 71 to 78 have the same shape and the same size in the present embodiment, they may have different shapes and different sizes.

As shown in FIG. 5 and FIG. 6, the clutch boss 42 includes a plurality of ribs 49. The ribs 49 are projecting in the axial direction from the second disc portion 42A. The ribs 49 extend from the second disc portion 42A in the same direction as the direction in which the second plate-supporting portion 42B extends from the second disc portion 42A. The ribs 49 extend in the radial direction. In FIG. 5, the arrow T denotes the rotation direction of the clutch boss 42. Denoting one of the ribs 49 that is closest to the first oil supply hole 71 and the second oil supply hole 72 as a rib 49a, the first oil supply hole 71 and the second oil supply hole 72 are located downstream of the rib 49a in the rotation direction T of the clutch boss 42. This similarly holds true also for the other oil supply holes 73 to 78, each located downstream of one of the ribs 49 closest thereto in the rotation direction T of the clutch boss 42.

As shown in FIG. 6, an end portion (hereinafter referred to as the "outer end") 49t of the rib 49a that is located outermost in the radial direction is located rightward of the first oil supply hole 71 and the second oil supply hole 72. For the axial direction of the clutch shaft 23A, the first oil supply hole 71 and the second oil supply hole 72 are located between the second disc portion 42A and the outer end 49t of the rib 49a. This similarly holds true also for the other oil supply holes 73 to 78.

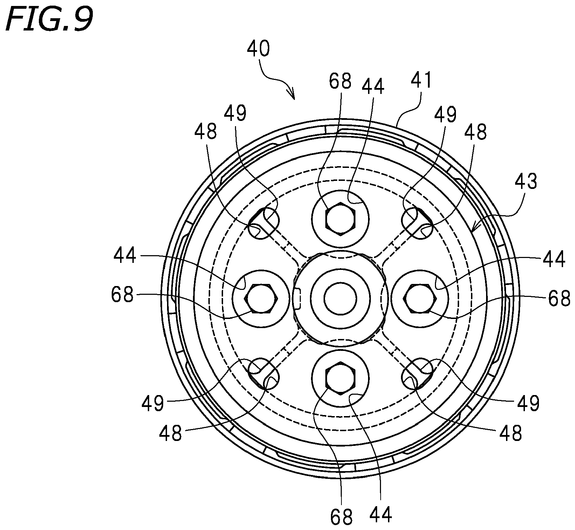

As shown in FIG. 9, the oil passage holes 48 are placed so as to be aligned with the ribs 49, as seen from the axial direction of the clutch shaft 23A. The nozzle 64 is placed so as to be temporarily aligned with the ribs 49, as seen from the axial direction of the clutch shaft 23A, during rotation of the clutch boss 42. As shown in FIG. 3, the distance K1 between the center axis 23c of the clutch shaft 23A and the center 64c of the nozzle 64 is equal to the distance K3 between the center axis 23c of the clutch shaft 23A and a part of the rib 49.

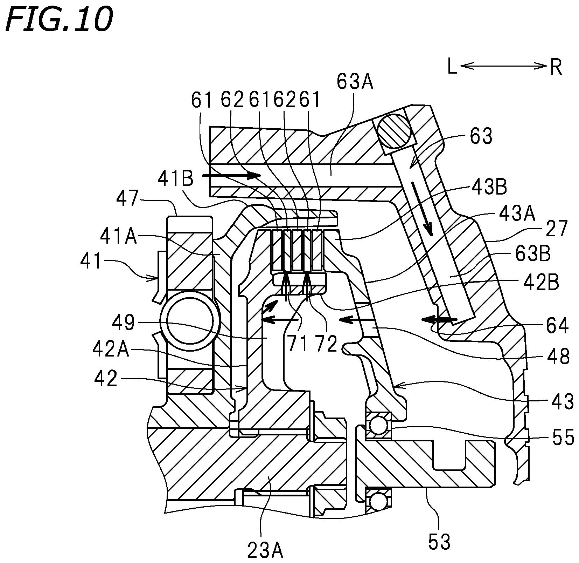

The power unit 3 including the clutch 40 is configured as described above. Next, referring to FIG. 10, the operation of supplying oil to the clutch 40 will be described. In the following description, the oil-supplying operation while the clutch 40 is engaged and the pressure plate 43 and the clutch boss 42 are rotating will be described.

As described above, oil is supplied to the oil passageway 63 from an oil pump (not shown). Since oil in the oil passageway 63 is under pressure, oil is injected from the nozzle 64. Since the pressure plate 43 is rotating, the state in which the nozzle 64 is aligned with an oil passage hole 48 as seen from the axial direction alternates with the state in which they are not aligned with each other.

In the state in which the nozzle 64 is aligned with an oil passage hole 48, oil injected from the nozzle 64 passes through the oil passage hole 48 to land on the second disc portion 42A of the clutch boss 42. On the other hand, in the state in which the nozzle 64 and the oil passage hole 48 are not aligned with each other, oil injected from the nozzle 64 hits the pressure plate 43 to be scattered around. At transition from the state in which the nozzle 64 and an oil passage hole 48 are aligned with each other to the non-aligned state, oil injected from the nozzle 64 hits the edge of the oil passage hole 48, which also promotes the scattering of oil.

Scattered oil is supplied over a wide area of the clutch 40. On the other hand, oil having landed on the second disc portion 42A of the clutch boss 42 is moved radially outward by the centrifugal force from the rotation of the clutch boss 42. This oil moves from the second disc portion 42A to the second plate-supporting portion 42B. Since the intersection 42E between the second disc portion 42A and the second plate-supporting portion 42B is rounded in the present embodiment, oil can easily move from the second disc portion 42A to the second plate-supporting portion 42B. Since the wall surface 42Bw of the second plate-supporting portion 42B is inclined with respect to the axial direction SL, oil under the centrifugal force can easily move rightward along the wall surface 42Bw. A part of this oil passes through the first to eighth oil supply holes 71 to 78 to be supplied to the first plates 61 and the second plates 62. Thus, oil can be desirably supplied to the first plates 61 and the second plates 62.

As described above, with the clutch 40 of the present embodiment, oil is supplied to the oil passageway 63 provided in the crankcase cover 27, and the oil is injected from the nozzle 64 toward the pressure plate 43. A part of the oil injected from the nozzle 64 passes through an oil passage hole 48 of the pressure plate 43 to be supplied to the second disc portion 42A of the clutch boss 42. This oil flows toward the second plate-supporting portion 42B under the centrifugal force generated from the rotation of the clutch boss 42. Then, oil having reached the second plate-supporting portion 42B passes through the first oil supply hole 71, etc., to be supplied to the first plates 61 and the second plates 62. Therefore, with the clutch 40 of the present embodiment, an oil passageway extending in the axial direction does not need to be provided inside the main shaft 23 (including the clutch shaft 23A). With the clutch 40 of the present embodiment, an oil passageway extending in the axial direction is not needed inside the main shaft 23. Therefore, it is possible to reduce the machining cost. Moreover, it is possible to reduce the diameter of the main shaft 23. Therefore, it is possible to reduce the diameter of the clutch 40 and the diameter of the transmission 35, thereby reducing the size of the power unit 3.

With the clutch 40 of the present embodiment, since oil is supplied to the second disc portion 42A of the clutch boss 42, it is possible to supply oil to locations closer to the first plates 61 and the second plates 62, as compared with a case in which oil is supplied from the clutch shaft 23A to the boss portion 42D of the clutch boss 42. Moreover, since the second disc portion 42A is farther away from the center axis 23c of the clutch shaft 23A than the boss portion 42D, the centrifugal force acting upon oil on the second disc portion 42A is greater than the centrifugal force acting upon oil on the boss portion 42D. Therefore, after oil is supplied to the clutch boss 42, it is possible to more quickly supply the oil to the first plates 61 and the second plates 62. Therefore, it is possible to increase the lubricity. Thus, with the clutch 40 of the present embodiment, it is possible to realize both a reduction in the machining cost and a good lubricity.

According to the present embodiment, as shown in FIG. 3, the distance K1 between the center axis 23c of the clutch shaft 23A and the center 64c of the nozzle 64 is equal to the distance K2 between the center axis 23c of the clutch shaft 23A and the center 48c of the oil passage hole 48. Therefore, the position of the nozzle 64 and the position of the oil passage hole 48 temporarily coincide with each other during rotation of the pressure plate 43. That is, the nozzle 64 and the oil passage hole 48 are aligned with each other as seen from the axial direction of the clutch shaft 23A. Since oil is scattered around the pressure plate 43, a part of the oil can pass through the oil passage hole 48 even if the position of the nozzle 64 and the position of the oil passage hole 48 do not coincide with each other. However, when the position of the nozzle 64 and the position of the oil passage hole 48 coincide with each other, oil injected from the nozzle 64 can easily pass through the oil passage hole 48. Therefore, with the clutch 40 of the present embodiment, oil injected from the nozzle 64 can be desirably supplied to the clutch boss 42, the clutch housing 41, the first plates 61 and/or the second plates 62. This makes it possible to further increase the lubricity.

On the other hand, if an excessive amount of oil is supplied to the first plates 61 and the second plates 62, a large amount of oil is held between the first plates 61 and the second plates 62, and the second plates 62 may possibly rotate together with the first plates 61 when the clutch 40 is disengaged. That is, the capacity to disengage the clutch 40 may possibly deteriorate. However, according to the present embodiment, the oil passage holes 48 are smaller than the spring holes 44, and the oil passage holes 48 are relatively small, as seen from the axial direction of the clutch shaft 23A, as shown in FIG. 7. Thus, it is possible to prevent an excessive amount of oil from being supplied to the clutch boss 42, the clutch housing 41, the first plates 61 and/or the second plates 62 through the oil passage holes 48.

According to the present embodiment, the oil passage hole 48a is provided between a spring hole 44a and another spring hole 44b with respect to the circumferential direction. Thus, it is possible to make efficient use of the area of the pressure plate 43 between the spring hole 44a and the spring hole 44b for providing the oil passage hole 48a. According to the present embodiment, the oil passage hole 48a can be provided without being interfered by the spring holes 44a and 44b, and it is possible to ensure the degree of freedom for the shape and the size of the oil passage hole 48a. Note that this similarly holds true also for the other oil passage holes 48.

According to the present embodiment, the number of oil passage holes 48 is not one, and there are a plurality of oil passage holes 48. The pressure plate 43 includes another oil passage hole 48b that is adjacent to the oil passage hole 48a in the circumferential direction. Therefore, it is possible to ensure a sufficient amount of oil to be supplied from the nozzle 64 to the clutch boss 42. Moreover, oil can be supplied relatively evenly.

According to the present embodiment, the second plate-supporting portion 42B of the clutch boss 42 includes the second oil supply hole 72, which is arranged next to the first oil supply hole 71 in the axial direction of the clutch shaft 23A. Therefore, oil can be supplied more smoothly to the first plates 61 and the second plates 62. Thus, it is possible to more desirably lubricate the clutch 40.

According to the present embodiment, the second plate-supporting portion 42B of the clutch boss 42 includes the third oil supply hole 73, which is arranged next to the first oil supply hole 71 in the circumferential direction. Therefore, oil can be supplied more smoothly to the first plates 61 and the second plates 62, and it is possible to more desirably lubricate the clutch 40.

According to the present embodiment, as shown in FIG. 5, the clutch boss 42 includes the rib 49a, and the first oil supply hole 71 and the second oil supply hole 72 are located downstream of the rib 49a in the rotation direction of the clutch boss 42. Since the clutch boss 42 is rotating, oil supplied to the clutch boss 42 is moved radially outward by the centrifugal force, and moves in the opposite direction to the rotation direction with respect to the clutch boss 42. Thus, oil supplied to the second disc portion 42A of the clutch boss 42 is held by the rib 49a. Since the first oil supply hole 71 and the second oil supply hole 72 are located downstream of the rib 49a in the rotation direction, the oil held by the rib 49a is likely to flow radially outward through the first oil supply hole 71 and the second oil supply hole 72. Therefore, it is possible to ensure a sufficient amount of oil to pass through the first oil supply hole 71 and the second oil supply hole 72. Thus, it is possible to sufficiently supply oil to the first plates 61 and the second plates 62. Note that this similarly holds true also for the other oil supply holes 73 to 78. That is, each of the oil supply holes 73 to 78 is located downstream of the nearest rib 49 in the rotation direction of the clutch boss 42. Therefore, it is possible to ensure a sufficient amount of oil passing through the oil supply holes 73 to 78.

According to the present embodiment, as shown in FIG. 3, the distance K1 between the center axis 23c of the clutch shaft 23A and the center 64c of the nozzle 64 is equal to the distance K3 between the center axis 23c of the clutch shaft 23A and a part of the rib 49. Therefore, the position of the nozzle 64 and the position of a part of the rib 49 temporarily coincide with each other during rotation of the pressure plate 43. That is, the position of the nozzle 64 coincides with the position of a part of the rib 49, as seen from the axial direction of the clutch shaft 23A. Therefore, it is possible to allow oil injected from the nozzle 64 to hit, and be diffused by, the ribs 49. According to the present embodiment, it is possible to desirably supply oil across the entire clutch 40.

While there is no particular limitation on the size of the nozzle 64, the nozzle 64 is smaller than the oil passage hole 48 as seen from the axial direction of the clutch shaft 23A in the present embodiment. Thus, by making the nozzle 64 relatively small, it is possible to prevent an excessive amount of oil from being supplied from the nozzle 64. Moreover, by making the nozzle 64 small, it is possible to increase the force of the oil injection from the nozzle 64. Thus, it is possible to desirably supply oil to the clutch boss 42.

According to the present embodiment, the distance L1 in the axial direction between the nozzle 64 and the oil passage hole 48 is shorter than the distance L2 in the axial direction between the oil passage hole 48 and the second disc portion 42A of the clutch boss 42. Since the distance between the nozzle 64 and the oil passage hole 48 is short, oil injected from the nozzle 64 can be quickly guided to the oil passage hole 48. Therefore, it is possible to ensure a sufficient amount of oil passing through the oil passage hole 48, and to desirably supply oil to the clutch boss 42.

According to the present embodiment, the intersection 42E between the second disc portion 42A and the second plate-supporting portion 42B of the clutch boss 42 is curved so that a part of the intersection 42E that is located more radially outward of the clutch shaft 23A extends more along the axial direction of the clutch shaft 23A. Therefore, oil under the centrifugal force can smoothly move from the second disc portion to the second plate-supporting portion, desirably supplying oil to the first plates and the second plates.

Although one preferred embodiment has been described above, the present teaching is not limited to the embodiment described above, but can be carried out in various other embodiments.

Although the clutch boss 42 does not include a through hole that allows oil to pass therethrough in the embodiment described above, the clutch boss 42 may include a through hole. Then, oil can be moved smoothly from the right side to the left side of the clutch boss 42, desirably supplying oil to the clutch housing 41. The position of the through hole may coincide with the position of the oil passage hole 48 as seen from the axial direction of the clutch shaft 23A. That is, the distance K2 between the center axis of the clutch shaft 23A and a part of the oil passage hole 48 may be equal to the distance between the center axis of the clutch shaft 23A and a part of the through hole. Then, oil injected from the nozzle 64 can be supplied directly to the clutch housing 41 through the oil passage hole 48 and the through hole.

Although the clutch 40 is provided at the right end of the main shaft 23 in the embodiment described above, the clutch 40 may be provided at the left end of the main shaft 23. In such a case, the pressure plate 43, the clutch boss 42 and the clutch housing 41 may be arranged in this order from left to right.

There is no oil passageway extending in the axial direction inside the main shaft 23 in the embodiment described above. However, an oil passageway extending in the axial direction may be provided inside the main shaft 23, together with the oil passageway 63, the nozzle 64 and the oil passage hole 48.

Although the power unit 3 includes the internal combustion engine 5 in the embodiment described above, an electric motor configured to drive the driving wheel (the rear wheel 30 in the embodiment described above) may be provided instead of the internal combustion engine 5.

### Reference Signs List

- 23A: Clutch shaft
- 27: Crankcase cover (cover)
- 40: Multiple-disc clutch
- 41: Clutch housing
- 42: Clutch boss
- 43: Pressure plate
- 45, 45a: Spring
- 48, 48a: Oil passage hole
- 50: Clutch release mechanism
- 61: First plate
- 62: Second plate
- 63: Oil passageway
- 64: Nozzle

## Claims

1. A multiple-disc clutch comprising:
a clutch shaft (23A);
a clutch housing (41) rotatably supported on the clutch shaft (23A), the clutch housing (41) including a first disc portion (41A) with a first through hole (51) therein accommodating the clutch shaft (23A) passing therethrough, and a first plate-supporting portion (41B) extending in an axial direction of the clutch shaft (23A) from the first disc portion (41A);
a clutch boss (42) supported on the clutch shaft (23A) so that the clutch boss (42) rotates together with the clutch shaft (23A), the clutch boss (42) including a second disc portion (42A) facing the first disc portion (41A) in the axial direction of the clutch shaft (23A), a boss portion (42D) with a second through hole (52) therein accommodating the clutch shaft (23A) passing therethrough, the boss portion (42D) extending in the axial direction of the clutch shaft (23A) from the second disc portion (42A), and a second plate-supporting portion (42B) located on a radial outer side of the boss portion (42D) in a radial direction of the clutch shaft (23A), the second plate-supporting portion (42B) extending in the axial direction of the clutch shaft (23A) from the second disc portion (42A);
a plurality of first plates (61) placed on a radial inner side of the first plate-supporting portion (41B) in the radial direction of the clutch shaft (23A) and supported on the first plate-supporting portion (41B);
a plurality of second plates (62) placed on a radial outer side of the second plate-supporting portion (42B) in the radial direction of the clutch shaft (23A) and supported on the second plate-supporting portion (42B), the second plates (62) facing the first plates (61);
a pressure plate (43) placed opposite from the clutch housing (41) with respect to the clutch boss (42);
a spring (45,45a) attached to the pressure plate (43) and configured to urge the pressure plate (43) toward the first plates (61) and the second plates (62);
a clutch release mechanism (50) configured to apply a force upon the pressure plate (43) in a direction away from the first plates (61) and the second plates (62); and
a cover (27) placed opposite from the clutch boss (42) with respect to the pressure plate (43), **characterised in that**:
the cover (27) includes an oil passageway (63) configured to allow oil to pass therethrough, and a nozzle (64) connected to the oil passageway (63), the nozzle (64) including an opening facing toward the pressure plate (43);
the pressure plate (43) includes an oil passage hole (48,48a,48b) configured to allow oil injected from the nozzle (64) to pass therethrough, the oil passage hole (48,48a,48b) being placed on a radial outer side of the boss portion (42D) of the clutch boss (42) in the radial direction of the clutch shaft (23A) and on a radial inner side of the second plate-supporting portion (42B) in the radial direction of the clutch shaft (23A); and
the second plate-supporting portion (42B) of the clutch boss (42) includes a first oil supply hole (71) extending in the radial direction of the clutch shaft (23A).

2. The multiple-disc clutch according to claim 1, wherein a distance (K1) between a center axis (23c) of the clutch shaft (23A) and a center (64c) of the nozzle (64) is equal to a distance (K2) between the center axis (23c) of the clutch shaft (23A) and a part (48c) of the oil passage hole (48,48a,48b).

3. The multiple-disc clutch according to claim 1 or 2, wherein the pressure plate (43) includes a spring hole (44,44a,44b) accommodating the spring (45,45a) therein; and the oil passage hole (48,48a,48b) is smaller than the spring hole (44,44a,44b) as seen from the axial direction of the clutch shaft (23A).

4. The multiple-disc clutch according to claim 3, further comprising another spring (45,45a) attached to the pressure plate (43) and configured to urge the pressure plate (43) toward the first plates (61) and the second plates (62), wherein:
the pressure plate (43) includes another spring hole (44,44a,44b) accommodating the other spring (45,45a) therein; and
the oil passage hole (48,48a,48b) is provided between the spring hole (44,44a,44b) and the other spring hole (44,44a,44b) with respect to a circumferential direction of the pressure plate (43).

5. The multiple-disc clutch according to any one of claims 1 to 4, wherein the pressure plate (43) includes another oil passage hole (48,48a,48b) adjacent to the oil passage hole (48,48a,48b) in a circumferential direction of the pressure plate (43).

6. The multiple-disc clutch according to any one of claims 1 to 5, wherein the second plate-supporting portion (42B) of the clutch boss (42) includes a second oil supply hole (72) extending in the radial direction of the clutch shaft (23A); and
the first oil supply hole (71) and the second oil supply hole (72) are arranged next to each other in the axial direction of the clutch shaft (23A).

7. The multiple-disc clutch according to any one of claims 1 to 6, wherein the second plate-supporting portion (42B) of the clutch boss (42) includes a third oil supply hole (73) extending in the radial direction of the clutch shaft (23A); and
the first oil supply hole (71) and the third oil supply hole (73) are arranged next to each other in a circumferential direction of the clutch boss (42).

8. The multiple-disc clutch according to any one of claims 1 to 7, wherein the clutch boss (42) includes a rib (49,49a) projecting in the axial direction of the clutch shaft (23A) from the second disc portion (42A) and extending in the radial direction of the clutch shaft (23A); and
the first oil supply hole (71) is located downstream of the rib (49,49a) in a rotation direction of the clutch boss (42).

9. The multiple-disc clutch according to claim 8, wherein a distance (K1) between a center axis (23c) of the clutch shaft (23A) and a center (64c) of the nozzle (64) is equal to a distance (K3) between the center axis (23c) of the clutch shaft (23A) and a part of the rib (49,49a).

10. The multiple-disc clutch according to any one of claims 1 to 9, wherein the nozzle (64) is smaller than the oil passage hole (48,48a,48b) as seen from the axial direction of the clutch shaft (23A).

11. The multiple-disc clutch according to any one of claims 1 to 10, wherein a distance (L1) in the axial direction of the clutch shaft (23A) between the nozzle (64) and the oil passage hole (48,48a,48b) is shorter than a distance (L2) in the axial direction of the clutch shaft (23A) between the oil passage hole (48,48a,48b) and the second disc portion (42A) of the clutch boss (42).

12. The multiple-disc clutch according to any one of claims 1 to 11, wherein an intersection (42E) between the second disc portion (42A) and the second plate-supporting portion (42B) of the clutch boss (42) is curved so that a part of the intersection (42E) that is located more radially outward extends more along the axial direction of the clutch shaft (23A).

13. A vehicle comprising the multiple-disc clutch according to any one of claims 1 to 12.

## Patentansprüche

1. Eine Mehr-Scheiben-Kupplung, die umfasst:
eine Kupplungs-Welle (23A);
ein Kupplungs-Gehäuse (41), das drehbar auf der Kupplungs-Welle (23A) gelagert ist, das Kupplungs-Gehäuse (41) beinhaltet einen ersten Scheibenabschnitt (41A) mit einem ersten Durchgangs-Loch (51) darin, welches die Kupplungs-Welle (23A) aufnimmt, welche durch dieses hindurch tritt, und einen ersten Platten-Lagerabschnitt (41B), der sich in eine Axial-Richtung der Kupplungs-Welle (23A) von dem ersten Scheibenabschnitt (41A) erstreckt;
eine Kupplungs-Nabe (42), die an der Kupplungs-Welle (23A) gelagert ist, so dass die Kupplungs-Nabe (42) zusammen mit der Kupplungs-Welle (23A) rotiert, die Kupplungs-Nabe (42) beinhaltet einen zweiten Scheibenabschnitt (42A), der dem ersten Scheibenabschnitt (41A) in der Axial-Richtung der Kupplungs-Welle (23A) zugewandt ist, einen Nabenabschnitt (42B) mit einem zweiten Durchgangs-Loch (42) darin, welches die Kupplungs-Welle (23A), die durch dieses hindurchtritt aufnimmt, der Nabenabschnitt (42D) erstreckt sich in die Axial-Richtung der Kupplungs-Welle (23A) von dem zweiten Scheibenabschnitt (42A), und einen zweiten Platten-Lagerabschnitt (42B), der an einer radialen Außenseite des Nabenabschnitts (42D) in einer Radial-Richtung der Kupplungs-Welle (23A) angeordnet ist, der zweite Platten-Lagerabschnitt (42B) erstreckt sich in die Axial-Richtung der Kupplungs-Welle (23A) von dem zweiten Scheibenabschnitt (42A);
eine Mehrzahl von ersten Platten (61), die an einer radialen Innenseite des ersten Platten-Lagerabschnitts (41B) in der Radial-Richtung der Kupplungs-Welle (23A) platziert sind und an dem ersten Platten-Lagerabschnitt (41B) gelagert sind;
eine Mehrzahl von zweiten Platten (62), die an einer radialen Außenseite des zweiten Platten-Lagerabschnitts (42B) in der Radial-Richtung der Kupplungs-Welle (23A) platziert sind und an dem zweiten Platten-Lagerabschnitt (42B) gelagert sind, die zweiten Platten (62) sind den ersten Platten (61) zugewandt;
eine Druck-Platte (43), die gegenüber von dem Kupplungs-Gehäuse (41) mit Bezug auf die Kupplungs-Nabe (42) platziert ist;
eine Feder (45, 45a), die an der Druck-Platte (43) angebracht ist und konfiguriert ist, um die Druck-Platte (43) zu den ersten Platten (61) und den zweiten Platten (62) zu drucken;
einen Kupplungs-Löse-Mechanismus (50), der konfiguriert ist, um eine Kraft auf die Druck-Platte (43) in einer Richtung, weg von den ersten Platten (61) und den zweiten Platten (62), aufzubringen; und
eine Abdeckung (27), die gegenüber von der Kupplungs-Nabe (42) mit Bezug auf die Druck-Platte (43) platziert ist,
**dadurch gekennzeichnet, dass**
die Abdeckung (27) einen Öl-Durchgangs-Weg (63) beinhaltet, der konfiguriert ist, um Öl zu gestatten, hindurchzutreten, und eine Düse (64), die mit dem Öl-Durchgangs-Weg (63) verbunden ist, die Düse (64) beinhaltet eine Öffnung, die zu der Druck-Platte (43) zugewandt ist;
die Druck-Platte (43) beinhaltet ein Öl-Durchgangs-Loch (48, 48a, 48b), das konfiguriert ist, um Öl zu gestatten von der Düse (64) eingespritzt zu werden, um durch diese hindurchzutreten, das Öl-Durchgangs-Loch (48, 48a, 48b) ist an einer radialen Außenseite des Nabenabschnitts (42B) der Kupplungs-Nabe (42) in der Radial-Richtung der Kupplungs-Welle (23A) und an einer radialen Innenseite des zweiten Platten-Lagerabschnitts (42B) in der Radial-Richtung der Kupplungs-Welle (23A) platziert;
der zweite Platten-Lagerabschnitt (42B) der Kupplungs-Nabe (42) beinhaltet ein erstes Öl-Zufuhrloch (71), das sich in der radialen Richtung der Kupplungs-Welle (23A) erstreckt.

2. Die Mehr-Scheiben-Kupplung gemäß Anspruch 1, wobei ein Abstand (K1) zwischen einer Mitten-Achse (23c) der Kupplungs-Welle (23A) und einer Mitte (64c) der Düse (64) gleich ist mit einem Abstand (K2) zwischen der Mitten-Achse (23c) der Kupplungs-Welle (23A) und einem Teil (48c) des Öl-Durchgangs-Lochs (48, 48a, 48b).

3. Die Mehr-Scheiben-Kupplung gemäß Anspruch 1 oder 2, wobei die Druck-Platte (43) ein Feder-Loch (44, 44a, 44b) beinhaltet, das darin die Feder (45, 45a) aufnimmt; und das Öl-Durchgangs-Loch (48, 48a, 48b) ist kleiner als das Feder-Loch (44, 44a, 44b), wenn gesehen von der Axial-Richtung der Kupplungs-Welle (23A).

4. Die Mehr-Scheiben-Kupplung gemäß Anspruch 3, die weiterhin umfasst eine andere Feder (45, 45a), die an der Druck-Platte (43) angebracht ist und konfiguriert ist, um die Druck-Platte (43) zu den ersten Platten (61) und den zweiten Platten (62) zu drucken, wobei:
die Druck-Platte (43a) ein anderes Feder-Loch (44, 44a, 44b) beinhaltet, welches die andere Feder (45, 45a) darin aufnimmt; und
das Öl-Durchgangs-Loch (48, 48a, 48b) ist zwischen dem Feder-Loch (44, 44a, 44b) und dem anderen Feder-Loch (44, 44a, 44b) mit Bezug auf eine Umfangs-Richtung der Druck-Platte (43) vorgesehen.

5. Die Mehr-Scheiben-Kupplung gemäß irgendeinem der Ansprüche 1 bis 4, wobei die Druck-Platte (43) ein anderes Öl-Durchgangs-Loch (48, 48a, 48b) beinhaltet,
benachbart zu dem Öl-Durchgangs-Loch (48, 48a, 48b) in einer Umfangs-Richtung der Druck-Platte (43).

6. Die Mehr-Scheiben-Kupplung gemäß irgendeinem der Ansprüche 1 bis 5, wobei der zweite Platten-Lagerabschnitt (42B) der Kupplungs-Nabe (42) ein zweites Öl-Zufuhrloch (72) beinhaltet, das sich in der Radial-Richtung der Kupplungs-Welle (23A) erstreckt; und
das erste Öl-Zufuhrloch (71) und das zweite Öl-Zufuhrloch (72) sind als nächstes einander in der Axial-Richtung der Kupplungs-Welle (23A) angeordnet.

7. Die Mehr-Scheiben-Kupplung gemäß irgendeinem der Ansprüche 1 bis 6, wobei der zweite Platten-Lagerabschnitt (42B) der Kupplungs-Nabe (42) ein drittes Öl-Zufuhrloch (73) beinhaltet, das sich in der Radial-Richtung der Kupplungs-Welle (23A) erstreckt; und
das erste Öl-Zufuhrloch (71) und das dritte Öl-Zufuhrloch (73) sind als nächstes einander in einer Umfangs-Richtung der Kupplungs-Nabe (42) angeordnet.

8. Die Mehr-Scheiben-Kupplung gemäß irgendeinem der Ansprüche 1 bis 7, wobei die Kupplungs-Nabe (42) eine Rippe (49, 49a) beinhaltet, die in der Axial-Richtung der Kupplungs-Welle (23A) von dem zweiten Scheibenabschnitt (42A) vorsteht, und sich in der Radial-Richtung der Kupplungs-Welle (23A) erstreckt; und
das erste Öl-Zufuhrloch (71) ist stromab von der Rippe (49, 49a) in einer DrehRichtung der Kupplungs-Nabe (42) angeordnet.

9. Die Mehr-Scheiben-Kupplung gemäß Anspruch 8, wobei ein Abstand (K1) zwischen einer Mitten-Achse (23c) der Kupplungs-Welle (23A) und einer Mitte (64c) der Düse (64) gleich mit einem Abstand (K3) zwischen der Mitten-Achse (23c) der Kupplungs-Welle (23A) und einem Teil der Rippe (49, 49a) ist.

10. Die Mehr-Scheiben-Kupplung gemäß irgendeinem der Ansprüche 1 bis 9, wobei die Düse (64) kleiner ist als das Öl-Durchgangs-Loch (48, 48a, 48b), wenn gesehen von der Axial-Richtung der Kupplungs-Welle (23A).

11. Die Mehr-Scheiben-Kupplung gemäß irgendeinem der Ansprüche 1 bis 10, wobei ein Abstand (L1) in der Axial-Richtung der Kupplungs-Welle (23A) zwischen der Düse (64) und dem Öl-Durchgangs-Loch (48, 48a, 48b) kürzer ist als ein Abstand (L2) in der Axial-Richtung der Kupplungs-Welle (23A) zwischen dem Öl-Durchgangs-Loch (48, 48a, 48b) und dem zweiten Scheibenabschnitt (42A) der Kupplungs-Nabe (42).

12. Die Mehr-Scheiben-Kupplung gemäß irgendeinem der Ansprüche 1 bis 11, wobei ein Schnitt (42E) zwischen dem zweiten Scheibenabschnitt (42A) und dem zweiten Platten-Lagerabschnitt (42B) der Kupplungs-Nabe (42) gekrümmt ist, so dass ein Teil des Schnitts (42E), der weiter radial außen angeordnet ist, sich weiter entlang der axialen Richtung der Kupplungs-Welle (43a) erstreckt.

13. Die Fahrzeug, das die Mehr-Scheiben-Kupplung gemäß irgendeinem der Ansprüche 1 bis 12 umfasst.

## Revendications

1. Embrayage multidisque comprenant :
un arbre d'embrayage (23A) ;
un boîtier d'embrayage (41) soutenu dans sa rotation sur l'arbre d'embrayage (23A), le boîtier d'embrayage (41) incluant une première partie de disque (41A) avec un premier trou traversant (51) dans celle-ci accueillant l'arbre d'embrayage (23A) passant à travers celui-ci, et une première partie de support de plaque (41B) s'étendant dans une direction axiale de l'arbre d'embrayage (23A) depuis la première partie de disque (41A) ;
un moyeu d'embrayage (42) soutenu sur l'arbre d'embrayage (23A) de sorte que le moyeu d'embrayage (42) tourne avec l'arbre d'embrayage (23A), le moyeu d'embrayage (42) comprenant une deuxième partie de disque (42A) orientée vers la première partie de disque (41A) dans la direction axiale de l'arbre d'embrayage (23A), une partie de moyeu (42D) avec un deuxième trou traversant (52) dans celle-ci accueillant l'arbre d'embrayage (23A) passant à travers celui-ci, la partie de moyeu (42D) s'étendant dans la direction axiale de l'arbre d'embrayage (23A) depuis la deuxième partie de disque (42A),
et une deuxième partie de support de plaque (42B) située sur un côté extérieur radial de la partie de moyeu (42D) dans une direction radiale de l'arbre d'embrayage (23A), la deuxième partie de support de plaque (42B) s'étendant dans la direction axiale de l'arbre d'embrayage (23A) depuis la deuxième partie de disque (42A) ;
une pluralité de premières plaques (61) placée sur un côté intérieur radial de la première partie de support de plaque (41B) dans la direction radiale de l'arbre d'embrayage (23A) et appuyée sur la première partie de support de plaque (41B) ;
une pluralité de deuxièmes plaques (62) placée sur un côté extérieur radial de la deuxième partie de support de plaque (42B) dans la direction radiale de l'arbre d'embrayage (23A) et appuyée sur la deuxième partie de support de plaque (42B), les deuxièmes plaques (62) étant orientées vers les premières plaques (61) ;
une plaque de pression (43) placée à l'opposé du boîtier d'embrayage (41) par rapport au moyeu d'embrayage (42) ;
un ressort (45, 45a) fixé à la plaque de pression (43) et configuré pour pousser la plaque de pression (43) vers les premières plaques (61) et les deuxièmes plaques (62) ;
un mécanisme de libération d'embrayage (50) configuré pour appliquer une force à la plaque de pression (43) dans une direction s'éloignant des premières plaques (61) et des deuxièmes plaques (62) ; et
un capot (27) placé à l'opposé du moyeu d'embrayage (42) par rapport à la plaque de pression (43),
**caractérisé en ce que** :
le capot (27) comprend un passage d'huile (63) configuré pour permettre à une huile de le traverser, et une buse (64) raccordée au passage d'huile (63), la buse (64) incluant une ouverture orientée vers la plaque de pression (43) ;
la plaque de pression (43) comprend un trou de passage d'huile (48, 48a, 48b) configuré pour permettre à une huile injectée depuis la buse (64) de le traverser, le trou de passage d'huile (48, 48a, 48b) étant placé sur un côté extérieur radial de la partie de moyeu (42D) du moyeu d'embrayage (42) dans la direction radiale de l'arbre d'embrayage (23A) et sur un côté intérieur radial de la deuxième partie de support de plaque (42B) dans la direction radiale de l'arbre d'embrayage (23A) ; et
la deuxième partie de support de plaque (42B) du moyeu d'embrayage (42) comprend un premier trou d'alimentation en huile (71) s'étendant dans la direction radiale de l'arbre d'embrayage (23A).

2. L'embrayage multidisque selon la revendication 1, dans lequel une distance (K1) entre un axe central (23c) de l'arbre d'embrayage (23A) et un centre (64c) de la buse (64) est égale à la distance (K2) entre l'axe central (23c) de l'arbre d'embrayage (23A) et une partie (48c) du trou de passage d'huile (48, 48a, 48b).

3. L'embrayage multidisque selon la revendication 1 ou 2, dans lequel la plaque de pression (43) comprend un trou de ressort (44, 44a, 44b) accueillant le ressort (45, 45a) en son sein ; et le trou de passage d'huile (48, 48a, 48b) est plus petit que le trou de ressort (44, 44a, 44b) du point de vue de la direction axiale de l'arbre d'embrayage (23A).

4. L'embrayage multidisque selon la revendication 3, comprenant en outre un autre ressort (45, 45a) fixé à la plaque de pression (43) et configuré pour pousser la plaque de pression (43) vers les premières plaques (61) et les deuxièmes plaques (62), dans lequel :
la plaque de pression (43) comprend un autre trou de ressort (44, 44a, 44b) accueillant l'autre ressort (45, 45a) en son sein ; et
le trou de passage d'huile (48, 48a, 48b) est fourni entre le trou de ressort (44, 44a, 44b) et l'autre trou de ressort (44, 44a, 44b) par rapport à une direction circonférentielle de la plaque de pression (43).

5. L'embrayage multidisque selon l'une quelconque des revendications 1 à 4, dans lequel la plaque de pression (43) comprend un autre trou de passage d'huile (48, 48a, 48b) adjacent au trou de passage d'huile (48, 48a, 48b) dans une direction circonférentielle de la plaque de pression (43).

6. L'embrayage multidisque selon l'une quelconque des revendications 1 à 5, dans lequel la deuxième partie de support de plaque (42B) du moyeu d'embrayage (42) comprend un deuxième trou d'alimentation en huile (72) s'étendant dans la direction radiale de l'arbre d'embrayage (23A) ; et
le premier trou d'alimentation en huile (71) et le deuxième trou d'alimentation en huile (72) sont disposés à proximité l'un de l'autre dans la direction axiale de l'arbre d'embrayage (23A).

7. L'embrayage multidisque selon l'une quelconque des revendications 1 à 6, dans lequel la deuxième partie de support de plaque (42B) du moyeu d'embrayage (42) comprend un troisième trou d'alimentation en huile (73) s'étendant dans la direction radiale de l'arbre d'embrayage (23A) ; et
le premier trou d'alimentation en huile (71) et le troisième trou d'alimentation en huile (73) sont disposés à proximité l'un de l'autre dans une direction circonférentielle du moyeu d'embrayage (42).

8. L'embrayage multidisque selon l'une quelconque des revendications 1 à 7, dans lequel le moyeu d'embrayage (42) comprend une nervure (49, 49a) se projetant dans la direction axiale de l'arbre d'embrayage (23A) depuis la deuxième partie de disque (42A) et s'étendant dans la direction radiale de l'arbre d'embrayage (23A) ; et
le premier trou d'alimentation en huile (71) est situé en aval de la nervure (49, 49a) dans une direction de rotation du moyeu d'embrayage (42).

9. L'embrayage multidisque selon la revendication 8, dans lequel une distance (Kl) entre un axe central (23c) de l'arbre d'embrayage (23A) et un centre (64c) de la buse (64) est égale à une distance (K3) entre l'axe central (23c) de l'arbre d'embrayage (23A) et une partie de la nervure (49, 49a).

10. L'embrayage multidisque selon l'une quelconque des revendications 1 à 9, dans lequel la buse (64) est plus petite que le trou de passage d'huile (48, 48a, 48b) du point de vue de la direction axiale de l'arbre d'embrayage (23A).

11. L'embrayage multidisque selon l'une quelconque des revendications 1 à 10, dans lequel une distance (L1) dans la direction axiale de l'arbre d'embrayage (23A) entre la buse (64) et le trou de passage d'huile (48, 48a, 48b) est plus courte qu'une distance (L2) dans la direction axiale de l'arbre d'embrayage (23A) entre le trou de passage d'huile (48, 48a, 48b) et la deuxième partie de disque (42A) du moyeu d'embrayage (42).

12. L'embrayage multidisque selon l'une quelconque des revendications 1 à 11, dans lequel une intersection (42E) entre la deuxième partie de disque (42A) et la deuxième partie de support de disque (42B) du moyeu d'embrayage (42) est courbée de sorte qu'une partie de l'intersection (42E) qui est située plus radialement vers l'extérieur s'étend davantage le long de la direction axiale de l'arbre d'embrayage (23A).

13. Véhicule comprenant l'embrayage multidisque selon l'une quelconque des revendications 1 à 12.
